# EUROPÄISCHE PATENTSCHRIFT

(11) **EP 3 419 811 B1**
(45) Veröffentlichungstag und Bekanntmachung des Hinweises auf die Patenterteilung: **04.12.2019**
(21) Anmeldenummer: 17706724.6
(22) Anmeldetag: 21.02.2017
(51) Int. Cl.: B29C 65/16, B29C 65/72, B29C 65/14, B29K 101/12

(54) **VERFAHREN ZUM SCHWEISSEN EINER VERBINDUNG ZWISCHEN EINER ERSTEN FÜGEFLÄCHE EINES ERSTEN FORMTEILS UND EINER ZWEITEN FÜGEFLÄCHE EINES ZWEITEN FORMTEILS**
METHOD FOR WELDING A CONNECTION BETWEEN A FIRST JOINING SURFACE OF A FIRST MOLDED PART AND A SECOND JOINING FACE OF A SECOND MOLDED PART
PROCÉDÉ POUR LE SOUDAGE D'UNE LIAISON ENTRE UNE PREMIÈRE SURFACE D'ASSEMBLAGE D'UNE PREMIÈRE PIÈCE FAÇONNÉE ET UNE DEUXIÈME SURFACE D'ASSEMBLAGE D'UNE DEUXIÈME PIÈCE FAÇONNÉE

(30) Priorität: 22.02.2016 DE 102016103060
(43) Veröffentlichungstag der Anmeldung: 02.01.2019
(73) Patentinhaber: Evosys Laser GmbH, 91056 Erlangen (DE)
(72) Erfinder: BRUNNECKER, Frank, 96117 Memmelsdorf (DE)
(74) Vertreter: Dr. Gassner & Partner mbB
(86) Internationale Anmeldenummer: PCT/EP2017/053868
(87) Internationale Veröffentlichungsnummer: WO 2017/144439

(56) Entgegenhaltungen:
- WO-A1-2004/058485
- JP-A- 2005 000 955
- JP-A- 2005 001 172
- US-B1- 6 369 351

## Beschreibung

Die Erfindung betrifft ein Verfahren zum Schweißen einer Verbindung zwischen einer ersten Fügefläche eines ersten Formteils und einer zweiten Fügefläche eines zweiten Formteils, deren Fügeflächen durch eine Spannvorrichtung miteinander in Kontakt gebracht und verspannt werden, wobei das erste Formteil für eine Primärstrahlung einer ersten Strahlungsquelle zumindest teilweise transparent und für eine Sekundärstrahlung einer zweiten Strahlungsquelle zumindest teilweise absorbierend und das zweite Formteil für die Primärstrahlung zumindest teilweise absorbierend ist, wobei das zweite Formteil mit der Primärstrahlung und das erste Formteil mit der Sekundärstrahlung sequentiell zeitlich nacheinander und abwechselnd bestrahlt werden.

Derartige Schweißverfahren sind im Stand der Technik bekannt und werden insbesondere zum Fügen von Kunststoffen, beispielsweise thermoplastischen Kunststoffen, verwendet. Dabei werden die beiden Formteile übereinander angeordnet und mit einer Spannvorrichtung miteinander in Kontakt gebracht und gegeneinander verspannt, so dass während des Schweißverfahrens die Fügeflächen der beiden Formteile in Kontakt stehen und verschweißt werden können. Bei einem so genannten "Durchschweißverfahren" oder "Laserdurchschweißverfahren" ist das erste Formteil über dem zweiten Formteil und somit hinsichtlich der Strahlwege näher an der ersten Strahlungsquelle und der zweiten Strahlungsquelle angeordnet. Da das erste Formteil für die Primärstrahlung transparent ist, kann diese das erste Formteil durchdringen, so dass die Primärstrahlung erst im zweiten Formteil absorbiert wird und dieses erwärmt. Als zumindest teilweise transparent bzw. zumindest teilweise absorbierend wird im Rahmen dieser Anmeldung verstanden, dass das entsprechende Formteil für die zugehörige Strahlung zum größten Teil transparent bzw. absorbierend ist. Selbstverständlich ist ein teilweise transparentes Material stets zu einem gewissen Grad absorbierend und ein teilweise absorbierendes Material ist auch teilweise transparent.

Durch das Absorbieren der Primärstrahlung wird das zweite Formteil erhitzt, so dass sich ein Schmelzzustand im Bereich des zweiten Formteils einstellt. Durch die Erhitzung des zweiten Formteils wird durch Wärmeleitung auch das erste Formteil an dessen Fügefläche erhitzt. Da das Erhitzen des zweiten Formteils in diesem Fall lediglich durch Wärmeleitung erfolgt, sind höhere Prozesszeiten die Folge. Im Stand der Technik wird daher das simultane Bestrahlen des ersten Formteils mit der Sekundärstrahlung einer zweiten Strahlungsquelle vorgeschlagen, um das erste Formteil ebenfalls unabhängig von der Primärstrahlung, also der Erhitzung des zweiten Formteils zu erhitzen.

Aus dem Dokument JP 2005-000955 A ist ein Verfahren mit den Merkmalen des Oberbegriffs des Patentanspruchs 1 bekannt. Bei dem dort beschriebenen Verfahren werden zwei Laser verwendet, wobei ein Laserstrahl für das Schweißverfahren und der andere Laser zur Qualitätskontrolle der hergestellten Schweißverbindung vorgesehen ist.

Das Dokument JP 2005-001172 A schlägt ein Verfahren vor, bei dem zwei Bauteile mit einer kreuzförmigen Schweißnaht miteinander verbunden werden. In einem ersten Schritt werden Schweißnähte erzeugt, die sich quer zur Kontaktfläche der beiden Bauteile erstrecken. In einem zweiten Schritt wird eine Schweißnaht entlang der Kontaktfläche erzeugt.

Die US 6,369,351 B1 beschreibt ebenfalls ein Laserschweißverfahren, bei dem Laserstrahlung mit zwei unterschiedlichen Wellenlängen eingesetzt wird.

Aus der Druckschrift EP 1 575 756 B1 ist ein Verfahren und eine Vorrichtung zum Konturschweißen dreidimensionaler Formteile bekannt. Dort wird das erste Formteil mit einer elektromagnetischen Sekundärstrahlung simultan zu dem Bestrahlen des zweiten Formteils durch die Primärstrahlung bestrahlt, so dass das Temperaturfeld in der Schweißzone homogenisiert wird. Mithin wird erreicht, dass das Erhitzen des ersten Formteils nicht allein durch die Wärmeleitung von dem zweiten Formteil erfolgt, sondern die Sekundärstrahlung wird hauptsächlich im ersten Formteil absorbiert, so dass diese eine Erhitzung des ersten Formteils bewirkt.

Bei dem bekannten Schweißverfahren dringt jedoch stets Sekundärstrahlung durch das erste Formteil hindurch und wird erst im zweiten Formteil absorbiert. Dabei handelt es sich zumeist um einen erheblichen Anteil der eingestrahlten Sekundärstrahlung, so dass bei der simultanen Bestrahlung die Energie der beiden Strahlungsquellen reduziert werden muss, um ein Überhitzen des zweiten Formteils zu verhindern. Durch die Reduzierung der Energie der beiden Strahlungsquellen resultiert eine Verlängerung der gesamten Prozessdauer.

Der Erfindung liegt daher die Aufgabe zu Grunde ein Schweißverfahren anzugeben, bei dem die Prozessdauer verkürzt ist.

Zur Lösung dieser Aufgabe ist bei einem Verfahren der eingangs genannten Art erfindungsgemäß vorgesehen, dass ein erster Fokus der Primärstrahlung auf der zweiten Fügefläche und ein zweiter Fokus der Sekundärstrahlung innerhalb des Volumens des ersten Formteils liegt.

Erfindungsgemäß wird vorteilhafter Weise erreicht, dass jede Strahlungsquelle mit ihrer maximal möglichen Energie eingesetzt werden kann und diese in das erste bzw. das zweite Formteil einstrahlen kann, so dass die Prozessdauer gegenüber den bekannten Schweißverfahren reduziert werden kann. Insbesondere ist dafür das sequentielle Bestrahlen durch die Primärstrahlung und die Sekundärstrahlung des ersten und zweiten Formteils essentiell. Somit kann verhindert werden, dass das Erhitzen des zweiten Formteils lediglich durch Wärmeleitung von dem ersten Formteil bzw. durch Bestrahlung des ersten Formteils durch die Primärstrahlung erfolgt. Ferner wird vermieden, dass die eingestrahlte Sekundärstrahlung, die das erste Formteil erhitzt, zu einer Überhitzung des zweiten Formteils führt. Durch die sequentielle, wechselnde Bestrahlung ist es möglich das erste Formteil und das zweite Formteil gezielter zu erwärmen, so dass eine Bestrahlung mit der maximalen Energie jeder Strahlungsquelle erfolgen kann und das Schweißverfahren somit besonders effizient durchgeführt werden kann.

Der in dieser Anmeldung verwendete Begriff "sequentiell" ist so zu verstehen, dass die Bestrahlungsvorgänge mit der Primärstrahlung bzw. der Sekundärstrahlung zeitlich nacheinander und somit abwechselnd erfolgen. Der Begriff ist indes nicht im Sinne von "fortlaufend" zu verstehen.

Das erfindungsgemäße Verfahrens sieht vor, dass ein erster Fokus der Primärstrahlung auf der zweiten Fügefläche und ein zweiter Fokus der Sekundärstrahlung innerhalb des Volumens des ersten Formteils liegt. Demnach kann die Primärstrahlung bevorzugt auf die zweite Fügefläche fokussiert werden, so dass die Energie der Primärstrahlung im Wesentlichen auf der zweiten Fügefläche, also der Fläche des zweiten Formteils, die der ersten Fügefläche, also der unteren Fläche des ersten Formteils, zugewandt ist, deponiert wird. Die Sekundärstrahlung wird bevorzugt innerhalb des Volumens des ersten Formteils fokussiert, so dass eine großflächige Erwärmung des ersten Formteils erfolgt.

Besonders bevorzugt wird bei dem erfindungsgemäßen Verfahren als Primärstrahlung eine monochromatische und als Sekundärstrahlung eine polychromatische Strahlung verwendet. Die erste Strahlungsquelle, die die Primärstrahlung abstrahlt, kann sonach bevorzugt als Laser ausgebildet sein. Die Sekundärstrahlung kann beispielsweise als breitbandige Strahlungsquelle ausgebildet sein, beispielsweise als Halogen-Lampe. Die Sekundärstrahlung der breitbandigen Strahlungsquelle wird dabei bevorzugt im ersten Formteil absorbiert, wobei die monochromatische Primärstrahlung in einer oberflächennahen Schicht des zweiten Formteils absorbiert wird. Durch das sequentielle Bestrahlen mit der Primärstrahlung und der Sekundärstrahlung können sonach sowohl das erste Formteil, also das zweite Formteil erhitzt werden, so dass sich ein Temperaturgradient weniger stark ausbildet als bei herkömmlichen Verfahren, beispielsweise dem herkömmlichen Laserdurchstrahlschweißen, bei dem die Energie des Primärstrahls im zweiten Formteil deponiert wird und das Erhitzen des ersten Formteils lediglich durch Wärmeleitung erfolgt. Dabei bildet sich ein großer Temperaturgradient zwischen dem ersten Formteil und dem zweiten Formteil aus, was sich zum einen in einer höheren Prozesszeit niederschlägt und dazu führen kann, dass im zweiten Formteil die Zersetzungstemperatur des Materials des zweiten Formteils überschritten werden kann.

Eine Weiterbildung des erfindungsgemäßen Verfahrens kann ferner darin bestehen, dass als Primärstrahlung oder als Primärstrahlung und als Sekundärstrahlung Laserstrahlung verwendet wird. Besonders bevorzugt ist dabei, dass sowohl als Primärstrahlung als auch als Sekundärstrahlung Laserstrahlung verwendet wird. Demnach können die erste und die zweite Strahlungsquelle Laser sein, die sich beispielsweise hinsichtlich ihrer Wellenlängen unterscheiden. Ebenso ist es möglich als Sekundärstrahlung eine breitbandige Strahlungsquelle und als Primärstrahlung einen Laser zu verwenden.

Besonders bevorzugt ist bei dem erfindungsgemäßen Verfahren vorgesehen, dass die Wellenlänge der Primärstrahlung und/oder die Wellenlänge der Sekundärstrahlung in einem ersten Intervall von 500 bis 1100 nm oder in einem zweiten Intervall von 900 bis 2400 nm liegt. Selbstverständlich kann die Wellenlänge der beiden Strahlungsquellen, die für das erfindungsgemäße Verfahren verwendet werden, beliebig auf einen konkreten Anwendungsfall, insbesondere auf Materialeigenschaften der beiden Formteile, abgestimmt werden.

Das erfindungsgemäße Verfahren kann ferner dahingehend weitergebildet werden, dass eine Steuerungseinrichtung die Primärstrahlung in Abhängigkeit eines ersten Parameters einschaltet und ausschaltet und die Sekundärstrahlung in Abhängigkeit eines zweiten Parameters einschaltet und ausschaltet. Demnach bestimmt ein erster Parameter, wann die Primärstrahlung eingeschaltet und ausgeschaltet wird und der zweite Parameter bestimmt bzw. legt fest, wann die Sekundärstrahlung eingeschaltet und ausgeschaltet wird. Sonach kann mittels des ersten und des zweiten Parameters geregelt werden, wie die Sequenz, in der die Primärstrahlung und die Sekundärstrahlung abwechselnd eingeschaltet und ausgeschaltet sind, abläuft. Als sequentielles Einschalten und Ausschalten wird im Rahmen dieser Anmeldung verstanden, dass entweder die Primärstrahlung oder die Sekundärstrahlung eingeschaltet ist und die jeweils andere Strahlung ausgeschaltet ist. Eine Sequenz der Bestrahlung besteht damit aus einem Intervall, in dem die Primärstrahlung eingeschaltet und die Sekundärstrahlung ausgeschaltet ist, an das sich ein Intervall anschließt, in dem die Primärstrahlung ausgeschaltet und die Sekundärstrahlung eingeschaltet ist, oder umgekehrt.

Dabei kann besonders bevorzugt vorgesehen sein, dass die Primärstrahlung und die Sekundärstrahlung in wenigstens zwei Sequenzen im Wechsel eingeschaltet und ausgeschaltet werden. Selbstverständlich ist es möglich, beliebig viele Sequenzen hintereinander auszuführen, so dass der Wechsel der Primärstrahlung und der Sekundärstrahlung bzw. deren Ein- und Ausschaltzeiten beliebig angepasst werden können. Insbesondere kann die Ein- und Ausschaltzeit der Primärstrahlung von der der Sekundärstrahlung abweichen. Ferner kann die Ein- und Ausschaltzeit der Primärstrahlung und der Sekundärstrahlung in jeder der aufeinander folgenden Sequenzen unterschiedlich lang ausgeprägt sein. Ferner können weitere Parameter, wie beispielsweise die Intensität der Primärstrahlung und/oder der Sekundärstrahlung, die Schreibgeschwindigkeit der Primärstrahlung und/oder der Sekundärstrahlung beliebig für jede Ein- und Ausschaltzeit festgelegt werden. Es können sonach mehrere Sequenzen hintereinander ausgeführt werden, bei denen sich die genannten Parameter zum einen zwischen der Primärstrahlung und der Sekundärstrahlung unterscheiden und zum anderen können die Parameter von Sequenz zu Sequenz variieren.

Gemäß dieser Ausgestaltung des erfindungsgemäßen Verfahrens kann ferner bevorzugt vorgesehen sein, dass der erste Parameter und/oder der zweite Parameter und/oder eine Schreibgeschwindigkeit der Primärstrahlung und/oder der Sekundärstrahlung und/oder eine Intensität der Primärstrahlung und/oder der Sekundärstrahlung derart festgelegt wird oder werden, dass der Energieeintrag durch die Bestrahlung im ersten und im zweiten Formteil größer ist als der Energieaustrag durch Wärmeleitung. Es kann sonach vorteilhafterweise geregelt werden, dass mehr Energie durch die Bestrahlung in dem ersten Formteil und zweiten Formteil deponiert wird als durch die Wärmeleitung verloren geht bzw. abgeführt wird. Als Schreibgeschwindigkeit wird dabei die Bewegungsgeschwindigkeit der Strahlung bzw. die Bewegungsgeschwindigkeit des Fokus der Strahlung entlang der zu verschweißenden Kontur verstanden. Eine hohe Schreibgeschwindigkeit bedeutet somit, dass die Strahlung sich schneller über die zu verschweißende Kontur bewegt, bzw. der Strahl schnell über die zu verschweißende Kontur geführt wird. Bei einer niedrigeren Schreibgeschwindigkeit verweilt die Strahlung bzw. deren Fokus länger auf einem Abschnitt der Kontur als bei einer höheren Schreibgeschwindigkeit.

Besonders bevorzugt ist in dieser Ausgestaltung des erfindungsgemäßen Verfahrens vorgesehen, dass ein Minimalwert des Energieeintrags im ersten und/oder im zweiten Formteil derart festgelegt wird, dass ein Schmelzzustand der ersten und/oder der zweiten Fügefläche aufrechterhalten wird. Somit wird gewährleistet, dass der Energieeintrag minimal derart gewählt wird, dass ein erreichter Schmelzzustand aufrechterhalten wird, und ein Verschweißen der beiden Formteile somit ermöglicht wird. Selbstverständlich wird dieser Minimalwert nach Beenden des Schweißvorgangs unterschritten, so dass die geschmolzenen Fügeflächen der beiden Formteile abkühlen und sich somit verbinden können. Besonders bevorzugt ist dabei vorgesehen, dass das erste und/oder das zweite Formteil derart beweglich gelagert ist bzw. sind, dass sich die Ausdehnungen bzw. Abmessungen der beiden Formteile während des Schmelzzustands durch Verschmelzen um eine definierte Längendifferenz ändern. Dazu ist die Spannvorrichtung bevorzugt derart gelagert bzw. ausgebildet, dass eine Formänderung der beiden Formteile unter der Wirkung der Spannkraft ermöglicht wird. Die sich dadurch ergebende Längenänderung kann sonach zur Regelung des Prozesses verwendet werden. Sonach kann der Schmelzzustand weggesteuert aufrechterhalten werden, so dass nach Erreichen einer bestimmten Länge und/oder Längenänderung bzw. dem Zurücklegen eines bestimmten Weges die Strahlung abgestellt wird, so dass die beiden Formteile miteinander verschmelzen. Alternativ kann der Prozess zeitgesteuert ausgeführt werden, so dass die Strahlung nach dem Ablauf einer bestimmten Zeit ausgeschaltet wird. Bei beiden Varianten kann entsprechend eine Zeitauswertung bzw. eine Wegauswertung erfolgen. Die sich durch den Schmelzvorgang ergebende Formänderung dient sonach bevorzugt als Steuerparameter für das erfindungsgemäße Verfahren.

Daneben kann besonders bevorzugt ein Maximalwert des Energieeintrags festgelegt werden, derart, dass eine Zersetzungstemperatur des ersten und/oder des zweiten Formteils nicht erreicht wird. Dadurch wird sichergestellt, dass die Energie, die durch die Bestrahlung des ersten und des zweiten Formteils in das Material eingebracht wird, nicht dazu führt, dass das erste und das zweite Formteil durch Überschreiten ihrer Zersetzungstemperatur beschädigt werden. Insbesondere durch das erfindungsgemäß vorgesehene sequentielle Bestrahlen des ersten und des zweiten Formteils mit der Primärstrahlung und der Sekundärstrahlung im Wechsel wird dabei erreicht, dass das erste Formteil durch die Sekundärstrahlung erhitzt wird, so dass die Erhitzung nicht ausschließlich über Wärmeleitung erfolgt und somit ein Erhitzen des zweiten Formteils über die Zersetzungstemperatur ausgeschlossen werden kann.

Eine bevorzugte Weiterbildung des erfindungsgemäßen Verfahrens sieht vor, dass als Bewegungssystem ein Galvanometerscanner verwendet wird. Durch einen mittels eines Galvanometers bewegten Spiegel können somit hohe Schreibgeschwindigkeiten erreicht werden, so dass die Primärstrahlung besonders zügig über die zu verschweißende Kontur geführt werden kann.

Die Erfindung wird nachfolgend anhand von Ausführungsbeispielen unter Bezugnahme auf die Zeichnungen näher erläutert. Die Zeichnungen sind schematische Darstellungen und zeigen:
- Fig. 1: eine Vorrichtung, die zur Durchführung des erfindungsgemäßen Verfahrens geeignet ist;
- Fig. 2: ein Detail der Vorrichtung von Fig. 1;
- Fig. 3: eine Schweißkontur an einer Fügefläche eines Formteils; und
- Fig. 4: ein Energie-/Zeit-Diagramm.

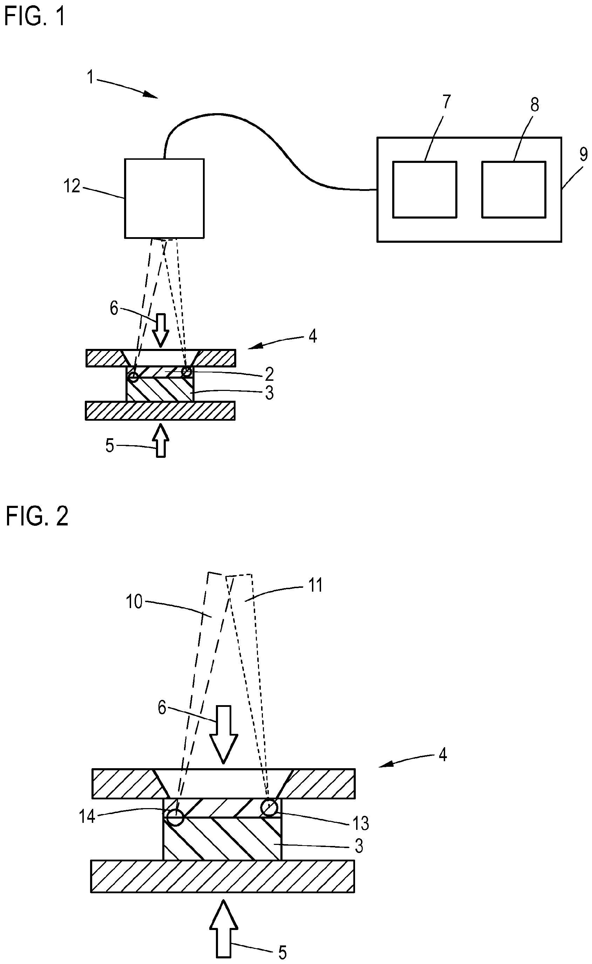

Fig. 1 zeigt eine Vorrichtung 1 zum Schweißen einer Verbindung zwischen einem ersten Formteil 2 und einem zweiten Formteil 3. Beide Formteile 2, 3 sind thermoplastische Kunststoffe. Die Vorrichtung 1 weist eine Spannvorrichtung 4 auf, die dazu ausgebildet ist, die beiden Formteile 2, 3 miteinander in Anlage zu bringen und zu verspannen. Das Verspannen ist durch die Pfeile 5, 6 schematisch dargestellt. Die Vorrichtung 1 weist ferner zwei Strahlungsquellen 7, 8 auf, die in einem gemeinsamen Gehäuse 9 angeordnet sind. Die erste Strahlungsquelle 7 emittiert dabei eine Primärstrahlung 10 und die zweite Strahlungsquelle 8 emittiert eine Sekundärstrahlung 11 (vgl. Fig. 2).

In diesem Ausführungsbeispiel sind die Strahlungsquellen 7, 8 als einzelne Strahlungsquellen ausgebildet, die mit je einem Laser bestückt sind, die in unterschiedlichen Wellenlängenbereichen emittieren. Die beiden Strahlungsquellen 7, 8 sind hinsichtlich ihrer Emission und Intensität getrennt voneinander ansteuerbar. Ferner ist ein Bewegungssystem 12, in diesem Fall ein Galvanometerscanner, gezeigt, in das die Strahlung der beiden Strahlungsquellen 7, 8 geführt wird.

Das erste Formteil 2 ist für die Primärstrahlung 10 transparent, so dass diese das erste Formteil 2 durchstrahlen und im zweiten Formteil 3 absorbiert werden kann. Das zweite Formteil 3 absorbiert die Primärstrahlung 10 dabei in einer oberflächennahen Schicht. Die Sekundärstrahlung 11 wird vom ersten Formteil 2 absorbiert, so dass das erste Formteil 2 durch das Bestrahlen mit der Sekundärstrahlung 11 erhitzt werden kann. Das erste Formteil 2 und das zweite Formteil 3 können bei entsprechender Steuerung der Strahlungsquellen 7, 8 sequentiell mit der Primärstrahlung 10 und der Sekundärstrahlung 11 bestrahlt werden. Demnach werden die beiden Formteile 2, 3 zeitlich nacheinander und somit abwechselnd mit der Primärstrahlung 10 und der Sekundärstrahlung 11 bestrahlt.

Fig. 2 zeigt ein Detail der Vorrichtung 1 von Fig. 1. Ersichtlich wird die Sekundärstrahlung 11 im ersten Formteil 2, insbesondere in dessen Volumen deponiert. Ein Fokus 13 der Sekundärstrahlung 11 liegt daher im Volumen des ersten Formteils 2. Die Primärstrahlung 10 weist einen Fokus 14 auf, der in einer oberflächennahen Schicht im zweiten Formteil 3 liegt, so dass die Fügefläche des zweiten Formteils 3, die dem ersten Formteils 2 zugewandt ist, gezielt erhitzt wird.

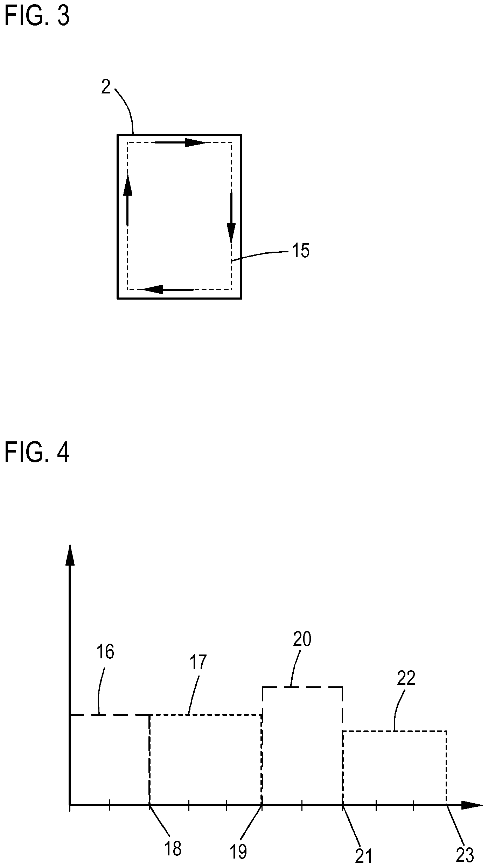

Fig. 3 zeigt eine beispielhafte Bearbeitungskontur des ersten Formteils 2 und des zweiten Formteils 3 von oben, also von dem Bewegungssystem 12 aus gesehen. Die Primärstrahlung 10 und die Sekundärstrahlung 11 werden mit hohen Schreibgeschwindigkeiten entlang einer gezeigten Kontur 15 geführt und im frei wählbaren zeitlichen Wechsel mit frei wählbaren Intensitäten eingeschaltet. Dadurch erfolgt eine gezielte und zügige Erhitzung der beiden Formteile 2, 3 an ihren Fügeflächen.

Fig. 4 zeigt ein Energie-/Zeit-Diagramm für einen beispielhaften Schweißvorgang. Dabei ist die Zeit auf der Abszisse und die Energie der jeweiligen Strahlungsquelle 7, 8 bzw. der Primärstrahlung 10 und der Sekundärstrahlung 11 auf der Ordinate aufgetragen. Die Energie der Primärstrahlung 10 ist in einem ersten Intervall mit Bezugszeichen 16 und die Energie der Sekundärstrahlung 11 ist in einem zweiten Intervall mit Bezugszeichen 17 versehen. Ersichtlich werden die beiden Formteile 2, 3 sequentiell durch die Primärstrahlung 10 und die Sekundärstrahlung 11 bestrahlt. Zu Beginn des Schweißvorgangs ist zunächst die Primärstrahlung 10 eingeschaltet, was durch den Energiewert 16 dargestellt ist. Die Sekundärstrahlung 11 ist dabei ausgeschaltet. Zu einem Zeitpunkt 18 wird die Primärstrahlung 10 ausgeschaltet und die Sekundärstrahlung 11 eingeschaltet, was durch den Energiewert 17 der Sekundärstrahlung 11 im Diagramm anzeigt wird. Zu einem Zeitpunkt 19 wird die Sekundärstrahlung 11 ausgeschaltet und die Primärstrahlung 10 wird wieder eingeschaltet, jedoch mit einer höheren Intensität, was zu einem erhöhten Energiewert 20 der Primärstrahlung 10 gegenüber dem Energiewert 16 führt. Zu einem Zeitpunkt 21 wird anschließend die Primärstrahlung 10 wieder ausgeschaltet und die Sekundärstrahlung 11 wieder eingeschaltet, jedoch mit einer niedrigeren Intensität als zwischen den Zeitpunkten 18 und 19, so dass sich ein gegenüber dem Energiewert 17 geringerer Energiewert 22 einstellt. Zu einem Zeitpunkt 23 wird die Sekundärstrahlung 11 ausgeschaltet, so dass sich die Fügeflächen der beiden Formteile 2, 3 abkühlen und miteinander verbinden können.

Durch das wechselseitige (abwechselnde) Einschalten und Ausschalten der Primärstrahlung 10 und der Sekundärstrahlung 11 können diese mit im Vergleich zu herkömmlichen Schweißverfahren höheren Energien betrieben werden, da die Energie der beiden Strahlungsquellen 7, 8, also der Primärstrahlung 10 oder Sekundärstrahlung 11 jeweils gezielt in einem der beiden Formteile 2, 3 deponiert werden kann. Somit wird vermieden, dass durch die Primärstrahlung 10 und die Sekundärstrahlung 11 gleichzeitig zu viel Energie in das zweite Formteil 3 eingebracht wird, und dies somit beschädigt werden kann.

## Patentansprüche

1. Verfahren zum Schweißen einer Verbindung zwischen einer ersten Fügefläche eines ersten Formteils (2) und einer zweiten Fügefläche eines zweiten Formteils (3), die durch eine Spannvorrichtung (4) mit ihren Fügeflächen miteinander in Kontakt gebracht und verspannt werden, wobei das erste Formteil (2) für eine Primärstrahlung (10) einer ersten Strahlungsquelle (7) zumindest teilweise transparent und für eine Sekundärstrahlung (11) einer zweiten Strahlungsquelle (8) zumindest teilweise absorbierend und das zweite Formteil (3) für die Primärstrahlung zumindest teilweise (10) absorbierend ist, wobei das zweite Formteil (3) mit der Primärstrahlung (10) und das erste Formteil (2) mit der Sekundärstrahlung (11) sequentiell zeitlich nacheinander und abwechselnd bestrahlt werden, **dadurch gekennzeichnet, dass** ein erster Fokus (14) der Primärstrahlung (10) auf der zweiten Fügefläche und ein zweiter Fokus (13) der Sekundärstrahlung (11) innerhalb des Volumens des ersten Formteils (2) liegt.

2. Verfahren nach Anspruch 1, **dadurch gekennzeichnet, dass** als Primärstrahlung (10) eine monochromatische Strahlung und als Sekundärstrahlung (11) eine polychromatische Strahlung verwendet wird.

3. Verfahren nach Anspruch 1, **dadurch gekennzeichnet, dass** als Primärstrahlung (10) oder als Primärstrahlung (10) und als Sekundärstrahlung (11) Laserstrahlung verwendet wird.

4. Verfahren nach einem der vorangehenden Ansprüche, **dadurch gekennzeichnet, dass** die Wellenlänge der Primärstrahlung (10) und/oder die Wellenlänge der Sekundärstrahlung (11) in einem ersten Intervall von 500 - 1100 nm oder in einem zweiten Intervall von 900 - 2400 nm liegt.

5. Verfahren nach einem der vorangehenden Ansprüche, **dadurch gekennzeichnet, dass** eine Steuerungseinrichtung die Primärstrahlung (10) in Abhängigkeit eines ersten Parameters einschaltet und ausschaltet und die Sekundärstrahlung (11) in Abhängigkeit eines zweiten Parameters einschaltet und ausschaltet.

6. Verfahren nach Anspruch 5, **dadurch gekennzeichnet, dass** die Primärstrahlung (10) und die Sekundärstrahlung (11) in wenigstens zwei Sequenzen im Wechsel eingeschaltet und ausgeschaltet werden.

7. Verfahren nach Anspruch 5 oder 6, **dadurch gekennzeichnet, dass** der erste Parameter und/oder der zweite Parameter und/oder eine Schreibgeschwindigkeit der Primärstrahlung (10) und/oder der Sekundärstrahlung (11) und/oder eine Intensität der Primärstrahlung (10) und/oder der Sekundärstrahlung (11) derart festgelegt wird oder werden, dass der Energieeintrag durch die Bestrahlung im ersten und im zweiten Formteil (2, 3) größer ist als der Energieaustrag durch Wärmeleitung.

8. Verfahren nach Anspruch 7, **dadurch gekennzeichnet, dass** ein Minimalwert des Energieeintrags im ersten und/oder im zweiten Formteil (2, 3) derart festgelegt wird, dass ein Schmelzzustand der ersten und/oder der zweiten Fügefläche aufrechterhalten wird.

9. Verfahren nach Anspruch 7 oder 8, **dadurch gekennzeichnet, dass** ein Maximalwert des Energieeintrags im ersten und/oder im zweiten Formteil (2, 3) derart festgelegt wird, dass eine Zersetzungstemperatur des ersten und/oder des zweiten Formteils (2, 3) nicht erreicht wird.

10. Verfahren nach Anspruch 8 oder 9, **dadurch gekennzeichnet, dass** das erste und/oder das zweite Formteil (2, 3) derart beweglich gelagert ist, dass die beiden Formteile (2, 3) während des Schmelzzustands um einen definierten Weg verschmelzen.

11. Verfahren nach einem der vorangehenden Ansprüche, **dadurch gekennzeichnet, dass** als Bewegungssystem ein Galvanometerscanner verwendet wird.

## Claims

1. A method for welding a connection between a first joining surface of a first molded part (2) and a second joining surface of a second molded part (3), which by means of a clamping device (4) are moved and braced with their joining surfaces in contact with one another, wherein the first molded part (2) is at least partially transparent for a primary beam (10) of a first radiation source (7) and at least partially absorbent for a secondary beam (11) of a second radiation source (8), and the second molded part (3) is at least partially absorbent for the primary beam (10), wherein sequentially chronologically one after the other and in alternation the second molded part (3) is irradiated with the primary beam (10) and the first molded part (2) is irradiated with the secondary beam (11), **characterized in that** a first focus (14) of the primary beam (10) lies on the second joining surface and a second focus (13) of the secondary radiation (11) lies within the volume of the first molded part (2).

2. The method according to claim 1, **characterized in that** a monochromatic beam is used as primary beam (10) and a polychromatic beam is used as secondary beam (11).

3. The method according to claim 1, **characterized in that** laser radiation is used as primary beam (10) or as primary beam (10) and as secondary beam (11).

4. The method according to any one of the preceding claims, **characterized in that** the wavelength of the primary beam (10) and/or the wavelength of the secondary beam (11) lies in a first interval of 500 - 1100 nm or in a second interval of 900 - 2400 nm.

5. The method according to any one of the preceding claims, **characterized in that** a control device switches the primary beam (10) on and off depending on a first parameter and switches the secondary beam (11) on and off depending on a second parameter.

6. The method according to claim 5, **characterized in that** the primary beam (10) and the secondary beam (11) are switched on and off in alternation in at least two sequences.

7. The method according to claim 5 or 6, **characterized in that** the first parameter and/or the second parameter and/or a writing speed of the primary beam (10) and/or of the secondary beam (11) and/or an intensity of the primary beam (10) and/or of the secondary beam (11) is or are defined in such a way that the energy input by the irradiation in the first and in the second molded part (2, 3) is greater than the energy discharge by heat conduction.

8. The method according to claim 7, **characterized in that** a minimum value of the energy input in the first and/or in the second molded part (2, 3) is defined in such a way that a state of fusion of the first and/or of the second joining surface is maintained.

9. The method according to claim 7 or 8, **characterized in that** a maximum value of the energy input in the first and/or in second molded part (2, 3) is defined in such a way that a decomposition temperature of the first and/or of the second molded part (2, 3) is not reached.

10. The method according to claim 8 or 9, **characterized in that** the first and/or the second molded part (2, 3) is mounted movably in such a way that the two molded parts (2, 3) fused by a defined path during the state of fusion.

11. The method according to any one of the preceding claims, **characterized in that** a galvanometer scanner is used as a movement system.

## Revendications

1. Procédé pour le soudage d'une liaison entre une première surface d'assemblage d'une première pièce moulée (2) et une deuxième surface d'assemblage d'une deuxième pièce moulée (3), qui sont mises en contact et serrées l'une contre l'autre avec leurs surfaces d'assemblage par un dispositif de serrage (4), en ce que la première pièce moulée (2) est au moins partiellement transparente pour un rayonnement primaire (10) d'une première source de rayonnement (7) et au moins partiellement absorbante pour un rayonnement secondaire (11) d'une deuxième source de rayonnement (8) et la deuxième pièce moulée (3) est au moins partiellement absorbante pour le rayonnement primaire (10), en ce que la deuxième pièce moulée (3) est irradiée séquentiellement successivement dans le temps et en alternance par le rayonnement primaire (10) et la première pièce moulée (2) est irradiée séquentiellement successivement dans le temps et en alternance par le rayonnement secondaire (11), **caractérisé en ce qu'**un premier foyer (14) du rayonnement primaire (10) se trouve sur la deuxième surface d'assemblage et un deuxième foyer (13) du rayonnement secondaire (11) dans le volume de la première pièce moulée (2).

2. Procédé selon la revendication 1, **caractérisé en ce qu'**un rayonnement monochromatique est utilisé comme rayonnement primaire (10) et un rayonnement polychromatique comme rayonnement secondaire (11).

3. Procédé selon la revendication 1, **caractérisé en ce qu'**un rayonnement laser est utilisé comme rayonnement primaire (10) ou comme rayonnement primaire (10) et comme rayonnement secondaire (11).

4. Procédé selon l'une des revendications précédentes, **caractérisé en ce que** la longueur d'onde du rayonnement primaire (10) et/ou la longueur d'onde du rayonnement secondaire (11) est comprise dans un premier intervalle de 500 à 1100 nm ou dans un deuxième intervalle de 900 à 2400 nm.

5. Procédé selon l'une des revendications précédentes, **caractérisé en ce qu'**un dispositif de commande connecte et déconnecte le rayonnement primaire (10) en fonction d'un premier paramètre et connecte et déconnecte le rayonnement secondaire (11) en fonction d'un deuxième paramètre.

6. Procédé selon la revendication 5, **caractérisé en ce que** le rayonnement primaire (10) et le rayonnement secondaire (11) sont connectés et déconnectés en alternance dans au moins deux séquences.

7. Procédé selon la revendication 5 ou 6, **caractérisé en ce que** le premier paramètre et/ou le deuxième paramètre et/ou une vitesse d'inscription du rayonnement primaire (10) et/ou du rayonnement secondaire (11) et/ou une intensité du rayonnement primaire (10) et/ou du rayonnement secondaire (11) est/sont défini(s) de telle sorte que l'apport d'énergie par l'irradiation dans la première et dans la deuxième pièce moulée (2, 3) est supérieur à la décharge d'énergie par conduction thermique.

8. Procédé selon la revendication 7, **caractérisé en ce qu'**une valeur minimale de l'apport d'énergie dans la première et/ou dans la deuxième pièce moulée (2, 3) est définie de telle sorte qu'un état de fusion de la première et/ou de la deuxième surface d'assemblage est maintenu.

9. Procédé selon la revendication 7 ou 8, **caractérisé en ce qu'**une valeur maximale de l'apport d'énergie dans la première et/ou dans la deuxième pièce moulée (2, 3) est définie de telle sorte qu'une température de décomposition de la première et/ou de la deuxième pièce moulée (2, 3) n'est pas atteinte.

10. Procédé selon la revendication 8 ou 9, **caractérisé en ce que** la première et/ou la deuxième pièce moulée (2, 3) est montée de manière mobile de telle sorte que les deux pièces moulées (2, 3) fusionnent d'une course définie pendant l'état de fusion.

11. Procédé selon l'une des revendications précédentes, **caractérisé en ce qu'**un scanner galvanométrique est utilisé comme système de mouvement.
